# FASCICULE DE BREVET EUROPEEN

(11) **EP 3 676 929 B1**
(45) Date de publication et mention de la délivrance du brevet: **15.06.2022**
(21) Numéro de dépôt: 18788807.8
(22) Date de dépôt: 23.08.2018
(51) Int. Cl.: H02J 3/38, G06Q 50/06, H02J 9/06, H02J 13/00

(54) **SYSTEME DE GESTION DE L'ENERGIE D'UN SITE TECHNIQUE**
SYSTEM ZUR ENERGIEVERWALTUNG AN EINEM TECHNISCHEN STANDORT
SYSTEM FOR MANAGING ENERGY AT A TECHNICAL SITE

(30) Priorité: 28.08.2017 FR 1757914
(43) Date de publication de la demande: 08.07.2020
(73) Titulaire: Experene, 94160 Saint-Mande (FR)
(72) Inventeur: MOSSALGUE, Thibaut, 94160 Saint-Mande (FR)
(74) Mandataire: Cabinet HERRBURGER
(86) Numéro de dépôt international: PCT/FR2018/052096
(87) Numéro de publication internationale: WO 2019/043321

(56) Documents cités:
- WO-A1-2016/069330
- US-A1- 2010 219 983
- US-A1- 2013 079 943
- US-A1- 2014 018 969
- US-A1- 2016 079 757

## Description

La présente invention a pour objet un système de gestion de l'énergie d'un site technique ainsi qu'un procédé de gestion de l'énergie mettant en œuvre le système.

### Etat de la technique

La recherche de l'économie d'énergie dans les installations techniques est un objectif d'actualité. Mais il n'existe pas de moyens systématiques pour faire ces recherches et améliorer la gestion de l'énergie d'un site technique, industriel ou autre.

### But de l'invention

La présente invention a pour but de développer un système et procédé de gestion de l'énergie d'un site technique permettant de connaître l'état de consommation d'énergie du site et de proposer des solutions permettant d'améliorer cette gestion de l'énergie du site.

### Exposé et avantages de l'invention

A cet effet, l'invention a pour objet un système de gestion de l'énergie d'un site technique ayant des équipements techniques, consommant ou produisant de l'énergie, répartis dans des locaux ou à l'extérieur de bâtiments pour la production, le stockage, le conditionnement, l'expédition ou encore de locaux de bureaux ou d'habitation comprenant :
- une répartition du site en zones formant des cellules traitées individuellement,
- une unité de gestion de l'équipement technique du site entre les zones,
- un programme de répartition, de suivi et de mise à jour des équipements techniques des zones entre les catégories d'équipements techniques,
- un tableau de répartition des équipements techniques établi par l'unité de gestion appliquant le programme le tableau étant image instantanée de l'équipement technique du site dans ses différentes zones et selon les catégories techniques,
- une base de données contenant l'état instantané des équipements techniques et de leurs paramètres,
- des organes de contrôle tels que des capteurs faisant partie des équipements techniques et constituant les équipements techniques associés aux équipements techniques installés dans les zones et transmettant des informations d'état des équipements à l'unité de gestion,
- une base de données des équipements de remplacement organisée en catégories parallèles aux catégories techniques de la base de données pour être fournis à l'unité centrale,
- des seuils associés aux différentes catégories techniques et aux équipements techniques,
- un sous-programme de comparaison appartenant, au programme pour appliquer les seuils à l'état des équipements techniques, et générer des signaux de contrôle en faisant des comparaisons c'est-à-dire en surveillant l'évolution de l'état d'un équipement technique ou du cumul des équipements techniques de la catégorie de toutes les zones ou un ensemble de zones sélectionnées et contrôlées pour proposer le remplacement des équipements par des équipements de remplacement pour améliorer la gestion de l'énergie du site technique.

L'invention a également pour objet un procédé de gestion de l'énergie d'un site technique appliqué par le système de gestion caractérisé en ce que
- on décompose le site en zones en fonction de critères techniques ou géographiques correspondant à des parties du site dont la gestion de l'énergie peut se faire individuellement pour chaque zone,
- faire un état des équipements techniques de chaque zone,
- répartir les équipements techniques d'une même zone entre les catégories techniques concernées,
- définir les paramètres des équipements techniques de chaque catégorie,
- cumuler les paramètres d'une même catégorie technique pour toutes les zones,
- comparer les paramètres de chaque équipement à un seuil,
- lancer une alerte en cas d'approche du seuil ou de dépassement de celui-ci par un ou plusieurs équipements techniques (équipements critiques),
- proposer un équipement technique de remplacement de l'équipement critique,
- comparer le cumul des paramètres des équipements techniques d'une catégorie à ceux d'une catégorie de substitution au cumul des équipements techniques avant cette substitution ou remplacement.

Le système de gestion et son procédé permettent de connaître très efficacement les solutions de remplacement pour faire évoluer un site technique dans le sens d'une meilleure gestion de l'énergie consommée.

Le système de gestion selon l'invention permet de faire des simulations simples et rapides pour connaître différentes solutions de substitution à un équipement technique ou à différents équipements techniques d'un site pour faciliter le choix d'une solution de remplacement.

Le système de gestion et son procédé peuvent s'appliquer de façon suivie à un site technique ou encore servir à faire un diagnostic d'un site pour proposer des solutions de substitution si cela apparaît comme nécessaire.

Dans le cas de différents sites auxquels est appliqué le système selon l'invention, les bases de données, tant celle propre à chaque site que la base des données des équipements de remplacement, doivent adapter au contexte technique de chaque site.

Cela peut se faire très rapidement à partir de l'information globale des équipements techniques du site et de la répartition de ces équipements entre les différentes zones.

L'invention permet également le suivi de la gestion de l'énergie d'un site pour connaître son évolution et là encore proposer des solutions de remplacement.

### Dessins

La présente invention sera décrite ci-après de manière plus détaillée à l'aide d'un exemple de système de gestion de l'énergie d'un site technique représenté dans les dessins annexés dans lesquels :
- la figure 1 est un schéma d'ensemble du système de gestion de l'énergie d'un site technique,
- la figure 2 montre l'état d'une zone du site et ses équipements techniques,
- la figure 3 est un tableau de la répartition des équipements techniques entre les différentes zones du site et en fonction des catégories techniques.

### Description de modes de réalisation de l'invention

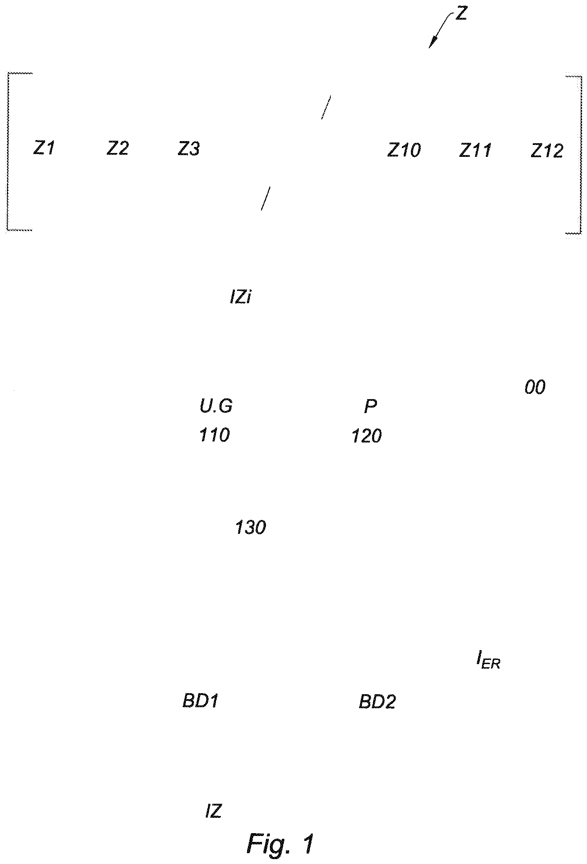

Selon la figure 1, l'invention a pour objet un système de gestion 100 de l'énergie d'un site technique Z avec un équipement Ez assurant son fonctionnement et une éventuelle production.

Le site Z est divisé en zones Zj en fonction de l'affectation ou de l'utilisation d'un groupe d'équipements. Les zones Zj correspondent à une division en locaux ou plus généralement en des zones réparties dans des bâtiments ou à l'extérieur de ceux-ci, telles que des locaux ou des halles de production, de stockage, de conditionnement, d'expédition ou locaux de bureaux ou d'habitation, tels que des institutions, des hôtels, des constructions, couvertes ou découvertes selon l'activité du site. Le site technique Z peut également être destiné à la fourniture de services nécessitant une organisation et un équipement technique tels que des groupes d'ordinateurs, des réseaux et plus généralement des moyens à caractère matériel ou immatériel combinés, comme par exemple des zones d'essai avec des bancs d'essais, des zones de contrôle, des laboratoires, etc.

Les zones Zj sont des cellules matérialisées ou non par un contour géométrique et qui sont traitées comme des entités individuelles par le système 100.

Les zones Zj du site technique Z ont des équipements fixes ou mobiles consommant ou produisant de l'énergie pour leur activité et la production le cas échéant des produits par des machines, des lignes de fabrication, des fours ou autres installations techniques ou industrielles, chimiques ou physiques.

La nature de l'énergie ne sera pas distinguée ici, si ce n'est par les équipements qui consomment ou produisent l'énergie.

Les équipements Ez du site technique Z sont répartis en catégories d'équipements Ei selon une classification propre au site ou plus générale, commune à plusieurs sites ou de préférence selon une classification générale des catégories d'équipements techniques Ei tels que chauffage, climatisation, ventilation, aération, éclairage, surveillance, cogénération, équipements solaires, équipement éolien, équipement de transport et machines industrielles de production.

A l'intérieur de la classification générale E des équipements techniques, un site Z n'est concerné que par un certain nombre de catégories d'équipements techniques Ei selon son activité. Cette classification générale E permet d'appliquer le système de gestion 100 selon l'invention à différentes catégories de sites.

Les équipements Ez sont surveillés par des moyens permettant d'en suivre les paramètres de fonctionnement tels que la durée de fonctionnement, les périodes de fonctionnement, la température, l'usure et autres paramètres intervenant dans le bilan énergétique de l'équipement ou dans son coût de fonctionnement.

Par définition, chaque zone Zj a des équipements techniques ei/m tels que des appareils de chauffage, ventilation, climatisation, éclairage..., des machines de production, appartenant à différentes catégories d'équipements Ei (i = 1...). Dans chaque catégorie d'équipements Ei, on distingue le modèle d'équipement ei/m installé et dont on connaît les caractéristiques de fonctionnement telles que la puissance consommée ou encore des données telles que l'ancienneté, le cycle d'entretien, de révision ou de réparation, l'usure des composants et tous les éléments intervenant dans le bilan énergétique de l'équipement ei/m et son coût de fonctionnement.

Des capteurs surveillent le fonctionnement et fournissent en temps réel les données de fonctionnement. Ces équipements de contrôle associés aux équipements techniques ci-dessus tels que des capteurs de température, dispositifs de mesure d'intensité ou de tension du courant ou encore de comptage de temps de fonctionnement ne sont pas pris ici séparément mais sont considérés comme combinés à chaque équipement surveillé.

Selon une autre approche, également possible avec le système 100 de l'invention, les équipements de contrôle qui ne sont pas intégrés dans les équipements qu'ils contrôlent ou qui contrôlent un produit, un résultat ou un effet ne se contrôlant pas directement sur l'équipement, sont eux-mêmes considérés comme des équipements ei/m à gérer.

Parmi ces équipements de contrôle, il peut y avoir des dispositifs ou installations contrôlant automatiquement la qualité des produits en sortie de production (respect des paramètres de fabrication, dimensions, couleurs, intégrité matérielle du produit) et les données ainsi collectées sont utilisées pour générer des cycles de révision ou de remplacement de l'outillage sur les machines.

Le système de gestion 100 se compose d'une unité de gestion 110 telle qu'un ordinateur, associée au site technique Z par un programme 120 et contenant l'état renseigné des équipements techniques (ei/m) du site Z dans ses différentes zones Zj et les données courantes, variables des équipements. Ces données sont enregistrées dans la base de données BD1 des équipements installés et sont mises à jour, soit par des informations entrées directement Iz dans la base BD1, soit par des informations d'état instantané ou autres informations à un instant donné Izi transmises à partir des zones Zi vers le système 100 pour être enregistrées dans la base de données BD1.

Le système 100 a également une base de données BD2 des équipements de remplacement ER contenant les informations de modèles (eri/m) d'équipements de remplacement de catégories ERi, classés comme les équipements Ei. Ces équipements de remplacement (eri/m) sont supposés pouvoir remplacer tel ou tel équipement installé ei/m, défaillant ou trop coûteux dans son entretien ou à rendement trop faible par rapport à l'état actuel de la technique ou ayant d'autres paramètres et disponibilités qui ne sont plus intéressants et en font un équipement à remplacer.

Cette base de données BD2 contient de préférence plusieurs équipements de remplacement (eri/mp) équivalents pour un même équipement à remplacer ei/m. Le choix de l'équipement de remplacement pourrait être fait aussi selon d'autres critères que des critères strictement économiques de rendement et de coût à moyen et/ou à long terme.

La base de données BD2 est mise à jour régulièrement en fonction de l'évolution et du développement des équipements techniques disponibles (entrée d'informations I_{ER}).

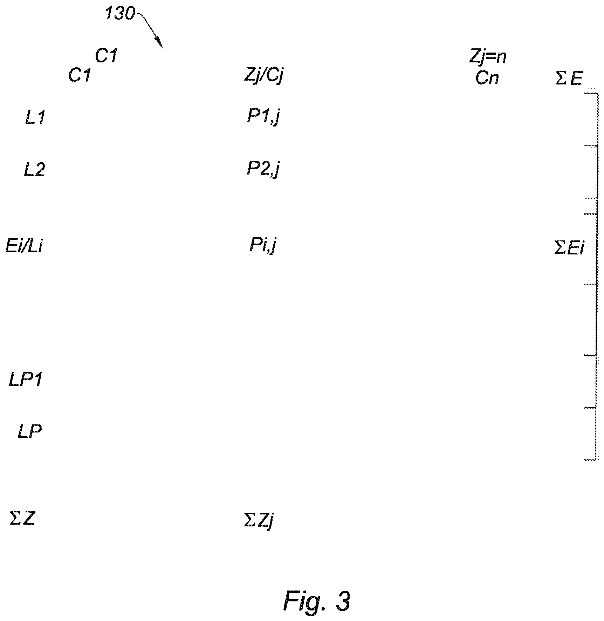

L'unité de gestion 110, telle qu'un ordinateur, a un programme 120 de décomposition des équipements installés ei/m du site Z en fonction de leur catégorie Ei par lignes Li et selon leur zone Zj, en colonnes Cj selon la figure 3.

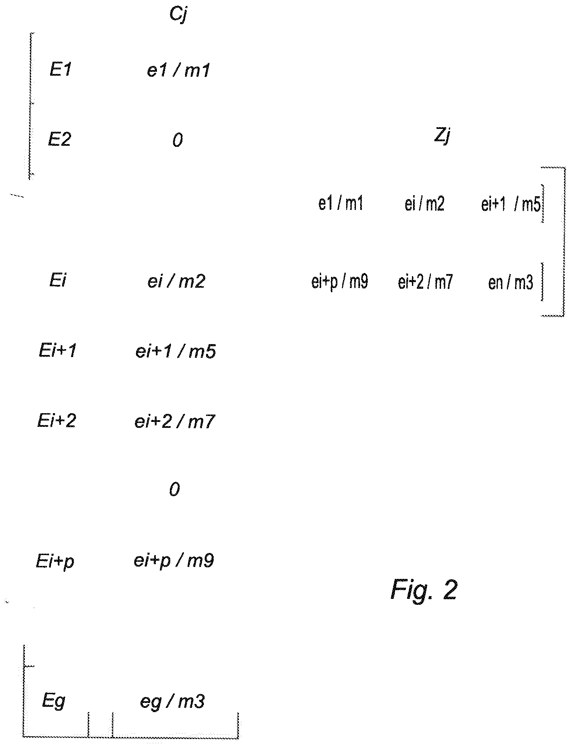

Après une première saisie de données, à savoir les zones Zj dans lesquelles le site technique Z est décomposé comme cela a été indiqué, l'unité de gestion 110 appliquant le programme 120 répartit les équipements ei/m de chaque zone Zj entre les catégories Ei comme cela est représenté à titre d'exemple à la figure 2.

Selon cet exemple, la zone Zj (un local) est équipée des équipements e1/m1, e1/m2, ei+1/m5, ei+2/m7, ei+P/m9 et eq/m3.

Comme le montre le schéma, le premier indice i de l'équipement ei/m est celui de la catégorie technique Ei (ligne Li) dont fait partie cet équipement et le second indice m caractérise le type de produit dans cette catégorie Ei.

Par exemple, Ei représente la catégorie des équipements de chauffage ; tous les équipements ei/m de cette catégorie ont le même indice i, le second indice « m » représentant le type d'équipement, ici ml, m2, m3, m5, m7, m9.

On distingue par exemple les radiateurs à huile, à eau, les radiateurs électriques, les appareils de chauffage électriques, à gaz, etc.

Une autre catégorie est celle des appareils de climatisation ou une autre, celle des dispositifs d'éclairage.

Dans cet exemple, l'état de la zone Zj avec tous ses équipements est représenté par le rectangle ainsi désigné à droite de la figure 2.

Il a été indiqué que la zone Zj était l'équivalent de la colonne Cj du tableau 130.

La figure 2 montre la répartition des équipements e1/m1... de la zone Zj entre les catégories Ei correspondant aux lignes. Toutes les positions de la colonne Cj ne sont pas occupées. Les positions inoccupées ont l'indication 0 ; les autres ont le nom de l'équipement (e1/m1, e1/m2...).

Les colonnes sont ensuite assemblées pour former un tableau matriciel représentant l'état du site Z.

Cette répartition est faite par l'unité de gestion 110 appliquant le programme 120 pour obtenir un tableau 130 (figure 3) dont les lignes Li sont synonymes de catégories d'équipements Ei (lignes de catégorie Li) et les colonnes Cj synonymes de zones Zj (colonnes de zone Cj).

Ainsi, la première ligne L1 se compose d'une succession de positions P1,j (j = 1...) représentant la succession des zones Zj (j = 1...) du site technique Z avec pour chaque zone Zj (j = 1...), l'équipement e1,m de la même catégorie d'équipement El présent ou non dans la zone Zj.

Dans cette répartition, la multiplicité d'un même modèle d'équipement ei/m dans une zone Zj, par exemple le nombre de radiateurs, est intégré dans la notion même de modèle d'équipement e1,m (m = 1...). Cette question se règle par la définition donnée à la notion de modèle d'équipement (ei/m). Ainsi, un même modèle de radiateur mais en nombre différent dans différentes zones Zj sera considéré comme correspondant à un modèle différent de cette même catégorie Ei, celle des radiateurs. A titre d'exemple, un équipement formé de deux radiateurs dans la zone Z1 sera considéré comme modèle d'équipement e1,1 et un équipement à trois radiateurs identiques sera considéré comme modèle e1,2. Cela est une simple question de définition et de codage.

Dans cette répartition du tableau 130 (figure 3), la colonne Cj représente pour la zone Zj, les positions Pi,j (i = 1...) de haut en bas, l'équipement ei/m de chacune des catégories E1...Ei aux lignes L1...Li...

La position ΣCj de la ligne séparée intentionnellement du bas du tableau 130 en forme de matrice, représente le cumul des modèles d'équipement ei/m (i = 1...)(m = 1...) de la zone Zj. Le cumul ΣCj de la zone Zj est en réalité l'état initial des équipements ei/m présents dans la zone Zj avant la ventilation des équipements selon les catégories Ei (i = 1...) c'est-à-dire les lignes Li (i = 1...).

La colonne ΣE au-delà de la dernière colonne Cj/Zj représente le cumul des modèles d'équipement ei/m (m = 1...) de toutes les zones Zj (j = 1...) de la même ligne Li, c'est-à-dire le cumul des modèles d'équipement ei/m (m = 1...) de la catégorie Ei qui se trouvent dans toutes les zones Zj (j = 1...) du site technique Z.

La présentation ci-dessus a été simplifiée en supposant que chaque position Pi,j représente la zone Zj avec son modèle d'équipement ei/m (m = 1...). Mais dans le système 100 selon l'invention, le module d'équipement ei/m est synonyme d'une série de caractéristiques techniques listées, par exemple la consommation journalière ou annuelle moyenne d'énergie ou le coût d'entretien, la durée de fonctionnement programmée et autres paramètres propres à chaque équipement ei/m et qui peuvent intervenir dans l'analyse technique ou économique du site. Le cumul dans la ligne Li représente alors la consommation moyenne quotidienne d'énergie par le site technique Z pour cette catégorie d'équipement technique Ei.

Dans le cas le plus simple d'un seul paramètre associé à chaque équipement ei/m, par exemple le coût de fonctionnement, le tableau 130 est un tableau matriciel à deux dimensions alors que si certains équipements ei/m ont plusieurs paramètres, le système de gestion 100 établit et renseigne une matrice tridimensionnelle ayant une troisième dimension, à savoir le nombre maximum de paramètres de l'équipement ayant le plus de paramètres.

Le système 100 selon l'invention permet de simuler le résultat du remplacement d'un ou plusieurs modèles d'équipement ei/m par des modèles d'équipement de remplacement eri/m et de connaître la conséquence de ce remplacement dans le cumul de la ligne Li en appliquant un sous-programme de comparaison 121 qui comparera deux états d'une même ligne Li avant et après le remplacement théorique de certains équipements ei/m par des équipements de remplacement eri/m. En cas de changement de technique, un seul équipement de remplacement eri/m peut remplacer une multiplicité d'équipements ei/m et cette situation sera également prise en compte dans la comparaison faite par le programme 121. Il en est de même si les équipements de remplacement eri+p/m appartiennent à une autre catégorie technique ERi+p que celle ERi dont les équipements eri/m sont équivalents aux équipements à remplacer ei/m comme cela sera détaillé ensuite.

Le remplacement peut également concerner un changement de technique. Ainsi, dans le cas d'un système de chauffage, par exemple un chauffage central, on peut simuler le passage total ou partiel au chauffage par pompe à chaleur, voire par la climatisation avec un système de pompe à chaleur réversible.

Les équipements ei/m de la catégorie Ei (chauffage) seront remplacés en simulation dans la ligne Li+p (Ei+p catégorie des équipements de climatisation) par des équipements de climatisation équivalents au sens du remplacement par des équipements de climatisation permettant ainsi de comparer le résultat dans la colonne des cumuls ΣE entre le cumul ΣEi des appareils de chauffage de toutes les zones et le cumul ΣEi+p des équipements de climatisation de toutes les zones.

L'état représenté par le tableau 130 est considéré comme l'état à l'instant donné si les équipements évoluent dans le temps. Il est alors possible de comparer les états à deux instants différents pour un même équipement. Le cumul ΣEi de la colonne ΣE sera surveillé dans le temps et les comparaisons entre ΣEi (t) et ΣEi' (t') à deux instants t et t' seront possibles. Les différents états dans le temps peuvent être enregistrés dans la base de données DB1.

Selon l'invention, l'intérêt ou le besoin du remplacement peut être déclenché par le programme 121 par la comparaison systématique de l'évolution d'un paramètre technique ou du coût d'un modèle d'équipement ei/m dans la zone Zj par comparaison avec un seuil Sei/m calculé ou défini au préalable pour toutes les positions Pi,j ou seulement pour certaines des positions les plus importantes.

Le besoin ou la nécessité technique ou économique de ce remplacement peuvent être mis en évidence sur l'affichage du tableau 130 sur un écran de contrôle montrant une position Pi,j à traiter.

Le système de gestion 100 est soit intégré dans un site technique Z et dédié à ce site, non seulement pour sa banque de données BD1 mais aussi pour la banque de données BD2 qui ne contiendra que les informations et catégories d'équipement ERi associées à ceux Ei du site Z. L'alimentation de la base de données BD2 se fait en fonction des modèles d'équipement ERi/m nouveaux qui peuvent apparaître.

Un modèle d'équipement eri/m (référence m) est un équipement ayant les caractéristiques appropriées pour remplacer un module ei/m existant.

La base de données BD2 contient pour chaque équipement équivalent ei/m, un ou plusieurs modèles de remplacement eri/m/p qui diffèrent par leurs origines (fabricants) ou par des caractéristiques secondaires dans une même gamme d'équipement ei/m d'un fabricant.

L'invention a également pour objet le procédé de gestion de l'énergie d'un site technique appliqué par le système de gestion tel que décrit ci-dessus.

Selon le procédé, on décompose d'abord le site Z en zones Zi en fonction de critères techniques ou géographiques pour distinguer des parties du site dont la gestion de l'énergie peut se faire individuellement pour chaque zone. En d'autres termes, les équipements d'une zone n'interviennent pas directement dans le fonctionnement des équipements même voisins ou identiques d'une autre zone. En parallèle on fait un état des équipements techniques ei/m de chaque zone Zi c'est-à-dire que l'on recense les équipements de cette zone. On répartit les équipements techniques ei/m de chaque zone Zi entre les catégories techniques Ei dont relèvent les équipements ei/m tels qu'appareil de chauffage, appareil de ventilation, alimentation en flux, machine de production...

Les catégories techniques sont, pour ne pas compliquer la situation, limitées aux seules catégories techniques concernées par le site ou un ensemble de sites traités de manière successive ou simultanée à l'aide du système de gestion de l'énergie.

Chaque équipement est défini par des paramètres qui seront utilisés pour la gestion de l'énergie du site. Ces paramètres sont par exemple l'âge de l'équipement, sa durée de fonctionnement, sa durée de fonctionnement cumulé, la puissance consommée, les temps d'arrêt occasionnés par les travaux d'entretien ou de révision réguliers, etc.

Ces différents paramètres se traduisent par un équivalent énergétique qui sera utilisé. En effet, pour chaque type d'équipement Ei, on fait le cumul des équipements, c'est-à-dire des différents paramètres pris un à un pour déterminer le cumul des effets ou coûts ou consommation d'énergie de ces équipements, catégorie par catégorie.

On compare les paramètres de chaque équipement ainsi que le cumul des différents paramètres à des seuils représentant un objectif à atteindre ou un élément de comparaison permettant d'apprécier de manière objective l'état des équipements de chaque catégorie.

Le procédé permet de lancer une alerte au cas où un équipement ou plusieurs équipements de différentes zones mais appartenant à la même catégorie technique atteignent un seuil pour tel ou tel de leurs paramètres ou dépassent le seuil et nécessitent éventuellement le remplacement.

Selon l'invention, une base de données contient des équipements techniques de remplacement, correspondant aux équipements techniques installés et permettant d'envisager le remplacement de tel ou tel équipement installé et de connaître l'intérêt de ce remplacement pour en évaluer dans un second temps le coût ou le gain en énergie que ce remplacement assure.

Le procédé permet également de comparer le niveau des équipements de même catégorie dans les différentes zones à des équipements de remplacement choisis dans une catégorie technique différente et qui devient avantageuse par suite de l'évolution de la technique concernée.

Il peut s'agir de systèmes de chauffage central que l'on peut remplacer par des pompes à chaleur ou par un système de cogénération.

Ce ne sont que des exemples.

### NOMENCLATURE/GLOSSAIRE

- Z: Site technique Zj Zone j du site (Z1, Z2, Z3...) local, emplacement de stockage, terrain extérieur...
- E: Equipement global Ei Catégorie d'équipement E1, E2, E3 ei/m Modèle m d'équipement de la catégorie Ei
- Ez: Equipement du site Z
- ER: Equipement de remplacement global ERi Catégorie d'équipement de remplacement (ER1, ER2, ER3) en parallèle aux catégories d'équipement (E1, E2, E3...) eri/m Modèle m d'équipement de remplacement de la catégorie ERi eri/m/p Origine p de modèle m Pij Zone Zj équipée d'un modèle d'équipement ei/m (eri/m)
- ΣEi: Cumul de l'équipement Ei pour toutes les zones Zj (j = 1...)
- ΣE: Colonne des cumuls ΣEI (j = 1...) de toutes les catégories
- ΣZj: Cumul de tous les modèles d'équipement ei/m (i = 1...) de la zone Zj
- ΣZ: Colonne des cumuls ΣZj (j = 1...)
- Cj: Colonnes de zone Zj
- Li: Ligne de catégorie d'équipement Ei
- 100: Système de gestion de l'énergie d'un site technique Z
- 110: Unité de gestion
- 120: Programme de décomposition et de regroupement
- 130: Tableau

## Revendications

1. Système de gestion de l'énergie d'un site technique (Z) ayant des équipements techniques (ei/m), consommant ou produisant de l'énergie, répartis dans des locaux ou à l'extérieur de bâtiments pour la production, le stockage, le conditionnement, l'expédition ou encore de locaux de bureaux ou d'habitation comprenant :
- une répartition du site (Z) en zones (Zj) formant des cellules traitées individuellement,
- une unité de gestion (110) de l'équipement technique (ei/m) du site (Z) entre les zones (Zj),
- un programme de répartition (120), de suivi et de mise à jour des équipements techniques (ei/m) des zones (Zi) entre les catégories (Ei) d'équipements techniques,
- un tableau de répartition (130) des équipements techniques (ei/m) établi par l'unité de gestion (110) appliquant le programme (120) le tableau (130) étant l'image instantanée de l'équipement technique du site dans ses différentes zones (Zj) et selon les catégories techniques (Ei),
- une base de données (BD1) contenant l'état instantané des équipements techniques (ei/m) et de leurs paramètres,
- des organes de contrôle tels que des capteurs faisant partie des équipements techniques (ei/m) et constituant les équipements techniques associés aux équipements techniques (ei/m) installés dans les zones (Zj) et transmettant des informations d'état (Izi) des équipements (ei/m) à l'unité de gestion (110),
- une base de données (BD2) des équipements de remplacement (ER) organisée en catégories (ERi) parallèles aux catégories techniques (Ei) de la base de données (BD1) pour être fournis à l'unité centrale (110),
- des seuils (Sei) associés aux différentes catégories techniques (Ei) et aux équipements techniques (ei/m),
- un sous-programme de comparaison (121) appartenant au programme (120) pour appliquer les seuils à l'état des équipements techniques (ei/m), et générer des signaux de contrôle en faisant des comparaisons c'est-à-dire en surveillant l'évolution de l'état d'un équipement technique (ei/m) ou du cumul (ΣEi) des équipements techniques (ei/m) de la catégorie (Ei) de toutes les zones (Zj) ou un ensemble de zones sélectionnées et contrôlées pour proposer le remplacement des équipements (ei/m) par des équipements de remplacement (ERi) pour améliorer la gestion de l'énergie du site technique (Z).

2. Procédé de gestion de l'énergie d'un site technique appliqué par le système de gestion selon la revendication 1,
**caractérisé en ce que**
- on décompose le site (Z) en zones (Zi) en fonction de critères techniques ou géographiques correspondant à des parties du site (Z) dont la gestion de l'énergie peut se faire individuellement pour chaque zone (Zi),
- faire un état des équipements techniques (ei/m) de chaque zone (Zi),
- répartir les équipements techniques (ei/m) d'une même zone (Zi) entre les catégories techniques (Ei) concernées,
- définir les paramètres des équipements techniques (ei/m) de chaque catégorie (Ei),
- cumuler les paramètres d'une même catégorie technique (Ei) pour toutes les zones (Zi),
- comparer les paramètres de chaque équipement (ei/m) à un seuil (Sei),
- lancer une alerte en cas d'approche du seuil ou de dépassement de celui-ci par un ou plusieurs équipements techniques (ei/m) (équipements critiques),
- proposer un équipement technique de remplacement (eri/m) de l'équipement critique,
- comparer le cumul des paramètres des équipements techniques d'une catégorie (Ei) à ceux d'une catégorie de substitution (ei+p) au cumul des équipements techniques (ei/m) avant cette substitution ou remplacement.

## Patentansprüche

1. System zur Energieverwaltung an einem technischen Standort (Z) mit technischen Einrichtungen (ei/m), die Energie verbrauchen oder erzeugen und in Räumen bzw. außerhalb von Gebäuden zur Produktion, Lagerung,
Verpackung und Auslieferung oder Büro- oder Wohnräumen verteilt sind, umfassend:
- eine Aufteilung des Standorts (Z) in Zonen (Zj), die einzeln behandelte Zellen bilden,
- eine Verwaltungseinheit (110) für die technische Einrichtung (ei/m) des Standorts (Z) zwischen den Zonen (Zj),
- ein Programm (120) zur Verteilung, Betreuung und Aktualisierung der technischen Einrichtungen (ei/m) der Zonen (Zi) zwischen den Kategorien (Ei) technischer Einrichtungen,
- eine Verteilungstabelle (130) für die technischen Einrichtungen (ei/m), die von der das Programm (120) anwendenden Verwaltungseinheit (110) erstellt wird, wobei die Tabelle (130) die Momentaufnahme der technischen Einrichtung des Standorts in seinen verschiedenen Zonen (Zj) und gemäß den technischen Kategorien (Ei) ist,
- eine Datenbank (BD1), die den momentanen Status der technischen Einrichtungen (ei/m) und ihrer Parameter enthält,
- Steuerglieder, wie etwa Sensoren, die zu den technischen Einrichtungen (ei/m) gehören und die technischen Einrichtungen bilden, die den in den Zonen (Zj) installierten technischen Einrichtungen (ei/m) zugeordnet sind, und die Statusinformationen (Izi) der Einrichtungen (ei/m) an die Verwaltungseinheit (110) übermitteln,
- eine Datenbank (BD2) für Ersatzeinrichtungen (ER) zum Bereitstellen für die zentrale Einheit (110), wobei die Datenbank in Kategorien (ERi) organisiert ist, die parallel zu den technischen Kategorien (Ei) der Datenbank (BD1) erfolgen,
- Schwellenwerte (Sei), die den verschiedenen technischen Kategorien (Ei) und den technischen Einrichtungen (ei/m) zugeordnet sind,
- eine Vergleichsroutine (121), die zum Programm (120) gehört, um die Schwellenwerte auf den Status der technischen Einrichtungen (ei/m) anzuwenden und Steuersignale zu erzeugen, indem Vergleiche angestellt werden, d. h. indem der Statusverlauf einer technischen Einrichtung (ei/m) oder der Kumulierung (ΣEi) der technischen Einrichtungen (ei/m) der Kategorie (Ei) aller Zonen (Zj) oder einer Gruppe ausgewählter und gesteuerter Zonen überwacht wird, um den Austausch der Einrichtungen (ei/m) durch Ersatzeinrichtungen (ERi) vorzuschlagen, um die Energieverwaltung des technischen Standorts (Z) zu verbessern.

2. Verfahren zur Energieverwaltung an einem technischen Standort, das von dem Verwaltungssystem nach Anspruch 1 angewendet wird,
**dadurch gekennzeichnet, dass**
- der Standort (Z) je nach technischen oder geografischen Kriterien in Zonen (Zi) zerlegt wird, die Teilen des Standorts (Z) entsprechen, deren Energieverwaltung für jede Zone (Zi) einzeln erfolgen kann,
- eine Bestandsaufnahme der technischen Einrichtungen (ei/m) jeder Zone (Zi) vorgenommen wird,
- die technischen Einrichtungen (ei/m) derselben Zone (Zi) auf die betreffenden technischen Kategorien (Ei) verteilt werden,
- die Parameter der technischen Einrichtungen (ei/m) jeder Kategorie (Ei) festgelegt werden,
- die Parameter derselben technischen Kategorie (Ei) für alle Zonen (Zi) kumuliert werden,
- die Parameter jeder Einrichtung (ei/m) mit einem Schwellenwert (Sei) verglichen werden,
- ein Alarm ausgelöst wird, wenn sich eine oder mehrere technische Einrichtungen (ei/m) (kritische Einrichtungen) dem Schwellenwert nähern oder diesen überschreiten,
- eine technische Ersatzeinrichtung (ei/m) für die kritische Einrichtung vorgeschlagen wird,
- die Kumulierung der Parameter der technischen Einrichtungen einer Kategorie (Ei) mit denjenigen einer Ersatzkategorie (ei+p) vor diesem Ersatz oder Austausch mit der Kumulierung der technischen Einrichtungen (ei/m) verglichen wird.

## Claims

1. System for managing energy at a technical site (Z) having technical equipment (ei/m) which consumes or produces energy and is distributed in premises or outside buildings for production, storage, packaging, shipping, or even office or residential premises, including:
- division of the site (Z) into zones (Zj) forming individually treated cells,
- a unit (110) for managing the technical equipment (ei/m) of the site (Z) between the zones (Zj),
- a program for distributing (120), tracking and updating the technical equipment (ei/m) of the zones (Zi) between technical equipment categories (Ei),
- a distribution table (130) of the technical equipment (ei/m) prepared by the management unit (110) applying the program (120), the table (130) being the instantaneous image of the technical equipment of the site in its different zones (Zj) and according to the technical categories (Ei),
- a database (BD1) containing the instantaneous state of the technical equipment (ei/m) and of the parameters thereof,
- control devices such as sensors forming part of the technical equipment (ei/m) and constituting the technical equipment, which control devices are associated with the technical equipment (ei/m) installed in the zones (Zj), and transmit state information (Izi) of the equipment (ei/m) to the management unit (110),
- a database (BD2) of replacement equipment (ER) organised into categories (ERi) parallel to the technical categories (Ei) of the database (BD1) to be supplied to the central processing unit (110),
- thresholds (Sei) associated with the different technical categories (Ei) and with the technical equipment (ei/m),
- a comparison subprogram (121) belonging to the program (120) for applying the thresholds to the state of the technical equipment (ei/m), and generating control signals by making comparisons, i.e. by monitoring the change in the state of an item of technical equipment (ei/m) or in the accumulation (LEi) of the technical equipment (ei/m) of the category (Ei) of all the zones (Zj) or a set of zones that are selected and controlled in order to propose the replacement of equipment (ei/m) by replacement equipment (ERi) in order to improve the energy management of the technical site (Z).

2. Method for managing the energy of a technical site, applied by the management system according to claim 1,
**characterised in that** the following is provided:
- the site (Z) is broken down into zones (Zi) according to technical or geographical criteria corresponding to parts of the site (Z) of which the energy management can be carried out individually for each zone (Zi),
- making an assessment of the technical equipment (ei/m) of each zone (Zi),
- distributing the technical equipment (ei/m) of the same zone (Zi) between the technical categories (Ei) in question,
- defining the parameters of the technical equipment (ei/m) of each category (Ei),
- accumulating the parameters of the same technical category (Ei) for all the zones (Zi),
- comparing the parameters of each item of equipment (ei/m) with a threshold (Sei),
- issuing an alert if the threshold is approached or exceeded by one or more items of technical equipment (ei/m) (critical equipment),
- proposing an item of technical equipment (eri/m) for replacing the critical equipment,
- comparing the accumulation of the parameters of the technical equipment of a category (Ei) with those of a substitution category (ei+p) with the accumulation of the technical equipment (ei/m) before this substitution or replacement.
